# EUROPÄISCHE PATENTSCHRIFT

(11) **EP 0 676 728 B1**
(45) Veröffentlichungstag und Bekanntmachung des Hinweises auf die Patenterteilung: **29.07.1998**
(21) Anmeldenummer: 95103617.7
(22) Anmeldetag: 14.03.1995
(51) Int. Cl.: G07C 5/12, G01P 1/12

(54) **Vorrichtung zur alphanumerischen Kennzeichnung von in einem Fahrtschreiber verwendeten Diagrammscheiben**
Device for the alphanumeric characterization of diagram discs used in a tachograph
Dispositif pour la caractérisation alphanumérique de disques à diagramme utilisés dans un tachygraphe

(30) Priorität: 08.04.1994 DE 4412180
(43) Veröffentlichungstag der Anmeldung: 11.10.1995
(73) Patentinhaber: Mannesmann VDO AG, 60326 Frankfurt (DE)
(72) Erfinder: Hug, Klaus, Dipl.-Ing. (FH), D-78727 Oberndorf (DE); Lais, Norbert, Dipl.-Ing. (FH), D-78052 Villingen-Schwenningen (DE)

(56) Entgegenhaltungen:
- EP-A- 0 027 875
- EP-A- 0 102 595
- DE-A- 3 043 375
- DE-A- 4 330 993
- DE-U- 8 804 412

## Beschreibung

Die Erfindung betrifft eine Vorrichtung zur alphanumerischen Kennzeichnung von in einem Fahrtschreiber verwendeten Diagrammscheiben, wobei der Fahrtschreiber mit einem Microprozessor zur Ermittlung von Fahrtdaten wie Strecke und Geschwindigkeit aus Gebersignalen sowie zur Lieferung von Arbeitszeitdaten wie Lenkzeit und Ruhezeit und dergleichen, mit einem Laufwerk für den uhrzeitrichtigen Antrieb einer eingelegten Diagrammscheibe und mit Registriermitteln zur kontinuierlichen Darstellung der ermittelten Daten auf der Diagrammscheibe ausgerüstet ist.

Der seit Jahrzehnten in Fahrtschreibern verwendete Datenträger "Diagrammscheibe" hat den Vorzug als Datenspeicher relativ leicht handhabbar und unmittelbar lesbar zu sein, so daß jederzeit stichprobenweise Kontrollen der aufgezeichneten Fahrtdaten oder der Arbeitszeiten bzw. des Einhaltens der Arbeitszeitrichtlinien vorgenommen werden können.

Bei dem heute üblichen Umgang mit dem Dokument "Diagrammscheibe" muß insbesondere was die Einhaltung der Arbeitszeitrichtlinien anbelangt, von den Fahrern und den Fahrzeughaltern in erheblichem Maße subjektive Sorgfalt und Ehrlichkeit erwartet werden. Das heißt Verstösse gegen die Arbeitszeitrichtlinien, die immer wieder zu folgenschweren Unfällen geführt haben, können bei der derzeitigen Praxis dann nicht mehr nachgewiesen werden, wenn belastende Diagrammscheiben vernichtet werden, wenn eine Diagrammscheibe nachträglich einem anderen Fahrer zugeordnet wird, in dem dessen Namen eingetragen wird oder wenn bei häufigem Fahrzeugwechsel nicht gleichzeitig auch die Diagrammscheibe dem bisher registrierenden Fahrtschreiber entnommen und in den Fahrtschreiber des zu übernehmenden Fahrzeuges eingelegt wird.

Eine wirksame Maßnahme gegen derartige Praktiken zur Umgehung der Arbeitszeitrichtlinien ist eine fahrerbezogene Kennzeichnung der Diagrammscheiben mit einer fortlaufenden Nummer. Eine solche Kennzeichnung, die die Diagrammscheiben eines Fahrers unverwechselbar diesem zuordnet, ermöglicht auf einfache Weise den Nachweis, daß sämtliche Diagrammscheiben des betreffenden Fahrers vorhanden sind.

Die vorgesehene gesetzliche Einführung einer Fahreridentifikationskarte bzw. eines in geeigneter Weise ausgebildeten Speicherschlüssels, die bzw. der dann gemeinsam mit der Diagrammscheibe im Fahrzeug verwendet werden muß, eröffnet die Möglichkeit bei jedem Einlegen einer Diagrammscheibe in einen Fahrtschreiber die Ziffernfolge eines in der Idenfikationskarte vorgesehenen beispielsweise dreistelligen Zählers zusammen mit der Fahrernummer auf der eingelegten Diagrammscheibe aufzubringen. Das Weiterschalten des Zählers der Identifikationskarte um jeweils eine Stelle erfolgt bei jedem Entnehmen einer Diagrammscheibe aus dem Fahrtschreiber oder zweckmäßigerweise bei jedem Öffnen des Fahrtschreibers, wenn dieser mit einem aufklappbaren Deckel versehen oder als Schubladengerät ausgebildet ist.

Während die funktionelle Verknüpfung der in einem geeigneten mit Verriegelungsmitteln versehenen Kartenschacht einzuführenden Identifikationskarte mit der Elektronik des Fahrtschreibers, das heißt der Datenverkehr mit der Identifikationskarte, ohne besondere Schwierigkeiten realisierbar ist, bestehen bezüglich des Aufbringens einer fahrerbezogenen Kennzeichnung auf den üblichen Diagrammscheiben erhebliche Probleme. Das heißt, es stellt sich neben dem Problem der räumlichen Anordnung und Ausbildung einer hierzu geeigneten Vorrichtung in einem relativ hochverdichteten Gerät, wie es ein Fahrtschreiber darstellt, die Frage nach der Art der Kennzeichnung und deren visuell lesbaren Anbringung auf der weitgehend mit unverzichtbaren, konzentrischen Registrierfeldern und Skalenaufdrucken belegten Diagrammscheibe. Hinzu kommt die Forderung der zeitgleichen Zuordnung der Kennzeichnung zu den jeweiligen Registrierungen. Ein weiteres Problem ist grundsätzlicher Art. Die im Fahrtschreiber verwendeten Diagrammscheiben sind für das "Wachspapier-Registrierverfahren" konzipiert mit dem Ziel, mit kontinuierlich auf den Diagrammscheiben aufliegenden Schreibstiften durch Verdrängen der Wachsschicht relativ feine Linien aufzuzeichnen, um insbesondere für die Geschwindigkeitsaufzeichnungen eine noch akzeptierbare Auflösbarkeit, für z. B. eine Unfallauswertung, zu erhalten. Ein solcher Aufzeichnungsträger weist also für eine alphanumerische Kennzeichnung eine denkbar schlechte Eignung auf.

EP-A- 0.102.595 offenbart einen Fahrtschreiber mit den Merkmalen des Oberbegriffs des Anspruchs 1.

Es war somit die Aufgabe gestellt, eine Vorrichtung zu schaffen, welche unter den geschilderten Verhältnissen das Aufbringen von alphanumerischen Kennzeichnungen auf übliche in Fahrtschreibern verwendete Diagrammscheiben ermöglicht, eine hohe Funktionssicherheit bietet und hinsichtlich des Aufwandes an den Bedingungen der Großserienfertigung orientiert ist.

Die Lösung der Aufgabe beschreibt der Anspruch 1. Vorteilhafte Ausgestaltungen der gefundenen Lösung stellen die Unteransprüche dar.

Mit der vorgeschlagenen Kennzeichnung wird die Funktion der Diagrammscheibe als fahrerbezogenes Fahrtendokument erheblich verbessert. Dabei ist wegen der Kleinheit der Zeichenelemente, durch die Punktdarstellung und insbesondere durch die Lösung, bei der jeder Punkt aus zwei Einzelstrichen gebildet ist, eine hohe Fälschungssicherheit gegeben. Zusätzlich stellt die Kennzeichnung eine Öffnungsmarkierung dar. Weitere Vorzüge der Erfindung sind in dem nachfolgenden speziellen Beschreibungsteil erwähnt. Hervorgehoben sei jedoch die Ausbildung des Trägers des Markierorgans, dessen Lagerung auf dem Träger und die Gestaltung des dem Markierorgan zugeordneten Antriebes, als eine in besonderer Weise raumnutzend optimierte Lösung in dem Bereich zwischen den übrigen Registrierorganen des Fahrtschreiber.

Im folgenden sei ein Ausführungsbeispiel der erfindungsgemäßen Vorrichtung anhand der beigefügten Zeichnungen näher erläutert. Es zeigen:
Fig. 1 einen Ausschnitt einer Diagrammscheibe mit zwei den üblichen Registrierungen eines Fahrtabschnitts zugeordneten Kennzeichnungen im Maßstab 1:1,
Fig. 2 eine zehnfach vergrößerte, lagerichtige Darstellung der Kennzeichnung X in Fig. 1 mit gedruckten Zeichenelementen,
Fig. 3 eine vergrößerte Darstellung der Einzelheit X in Fig. 1 mit geschriebenen Zeichenelementen,
Fig. 4 eine vergößerte Draufsicht des gewählten Ausführungsbeispiels,
Fig. 5 eine teilweise freigeschnittene (Schnitt A in Fig. 4) Seitenansicht der Vorrichtung gemäß Fig. 4,
Fig. 6 eine hundertfach vergrößerte Schnittdarstellung einer Diagrammscheibe und eines als Druckstift ausgebildeten Markierorgans,
Fig. 7 eine Schnittdarstellung gemäß Fig. 6 mit einem als Schreibstift ausgebildeten Markierorgan,

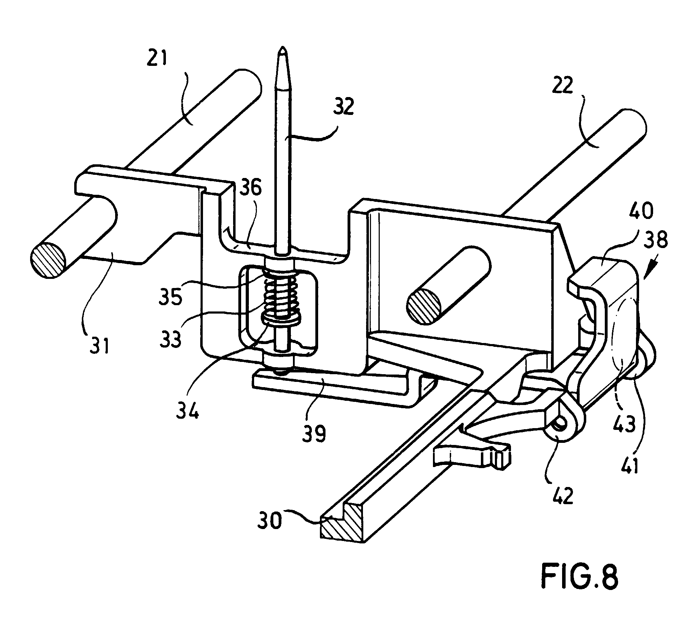

Fig. 8 eine perspektifische Teildarstellung des Ausführungsbeispiels.

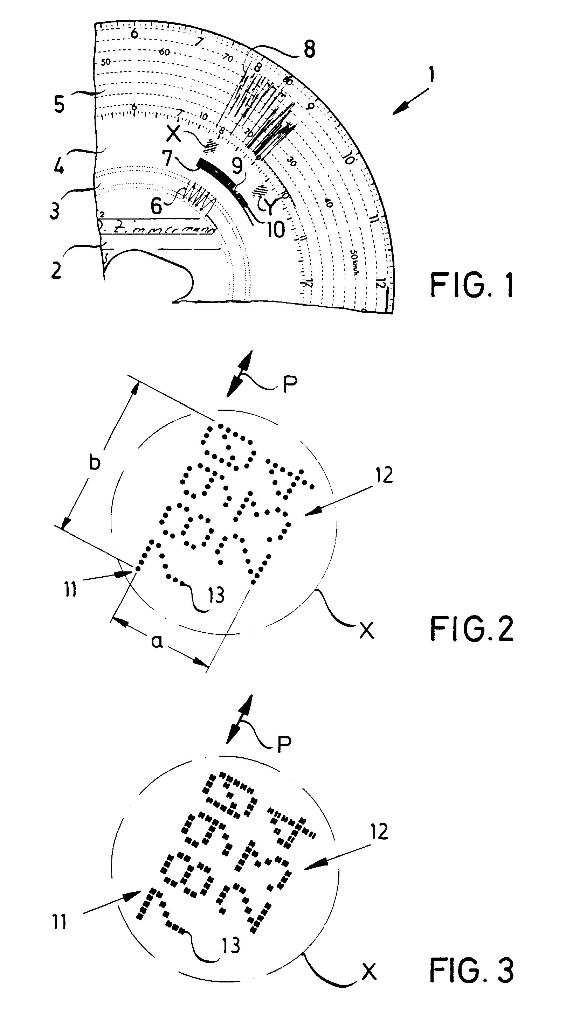

Wie aus der Fig. 1 ersichtlich ist, handelt es sich bei der zu kennzeichnenden Diagrammscheibe 1 um eine an sich übliche Ausführung mit einem Innenfeld 2, in welchem persönliche Daten des Fahrers und fahrzeugspezifische Werte einzutragen sind, einem ringförmigen Aufzeichnungsfeld 3 für die Darstellung der zurückgelegten Strecken in Form einer Zickzackkurve, einem weiteren Aufzeichnungsfeld 4, in welchem die Pausen und verschiedene Arten von Arbeitszeiten in Form von Balkendiagrammen sowie Zusatzaufzeichnungen, z. B. Strichmarken für den Kraftstoffverbrauch, aufgezeichnet werden und ein Aufzeichnungsfeld 5, in welchem die Geschwindigkeitsaufzeichnungen erfolgen. Die Fig. 1 zeigt ferner die Aufzeichnung einer Fahrt mit einem Wegdiagramm 6, einer Lenkzeitaufzeichnung 7 sowie einem Geschwindigkeitsdiagramm 8. Bevor die Diagrammscheibe 1 dem betreffenden Fahrtschreiber entnommen worden ist, sind gemäß den Balkendiagrammelementen 9 und 10 nach der Fahrt vom Fahrer unterschiedliche Arbeiten ausgeführt worden. Außerdem läßt sich der Fig. 1 entnehmen, daß nach dem Einlegen der Diagrammscheibe 1 in den Fahrtschreiber eine im folgenden noch zu beschreibende Vorrichtung in dem Aufzeichnungsfeld 4 der Diagrammscheibe 1 eine mit X bezeichnete Kennzeichnung, bestehend aus einer Fahrernummer 11 und einer dreistelligen Diagrammscheibennummer 12 aufgezeichnet hat. Diese Aufzeichnung erfolgt jedoch erst dann, wenn die Identifikationskarte des Fahrers in einen vorgesehenen Kartenschacht nicht mehr ohne weiteres entnehmbar eingeführt ist. Mit Y ist eine weitere Kennzeichnung, bestehend aus der Fahrernummer und einer gegenüber der Kennzeichnung X um "1" erhöhten Diagrammscheibennummer bezeichnet. Die Kennzeichnung Y macht deutlich, daß während des Arbeitsintervalls 10 der Fahrtschreiber kurzzeitig geöffnet worden ist, was gegebenenfalls als Unterbrechung des Balkendiagramms 10 nicht ersichtlich ist.

Die Fig. 2, eine zehnfach vergrößerte Darstellung der Kennzeichnung X, zeigt, daß jedes einzelne Zeichen aus Punkten gebildet ist, welche aus einer 7 x 5 Punktmatrix ausgewählt sind, wobei die einzelnen Punkte 13 größenordnungsmäßig einen Durchmesser von 0,1 mm aufweisen und die Maße a und b des Kennzeichnungsfeldes ungefähr 3 bzw. 4 mm betragen. Es ist ersichtlich, daß das Maß b noch etwas größer gewählt werden kann, so daß die Fahrernummer um wenigstens ein Zeichen, das auch ein Buchstabe sein kann, erweiterbar wäre. Dabei ist gewährleistet, daß die Abmessungen der Zeichen insbesondere in radialer Richtung, eine ohne Hilfsmittel verwenden zu müssen, zufriedenstellende visuelle Lesbarkeit von Fahrer- und Diagrammscheibennummer 11, 12 gestatten.

Der in Fig. 2 gezeichnete Doppelpfeil P symbolisiert eine in Bezug auf die Diagrammscheibe 1 radiale Bewegung eines Markierorgans, das, wie nachfolgend noch erläutert wird, auf einem in geeigneter Weise angetriebenen Träger gelagert ist, über der Diagrammscheibe 1 hin und her bewegt und zum Erzeugen eines Punktes 13 auf die Diagrammscheibe 1 abgesenkt und wieder angehoben wird. Dabei wird der uhrzeitrichtige Diagrammscheibentransport in das Aufbringen der Kennzeichnung X mit einbezogen, das heißt, der Antrieb für die Hin und Herbewegung des Markierorgans wird nach einem Zyklus bzw. nach dem Schreiben einer Kennzeichenzeile solange gestoppt, bis durch Zeitablauf die nächste Zeile des Kennzeichens X sich in der Bewegungsebene des Markierorgans befindet.

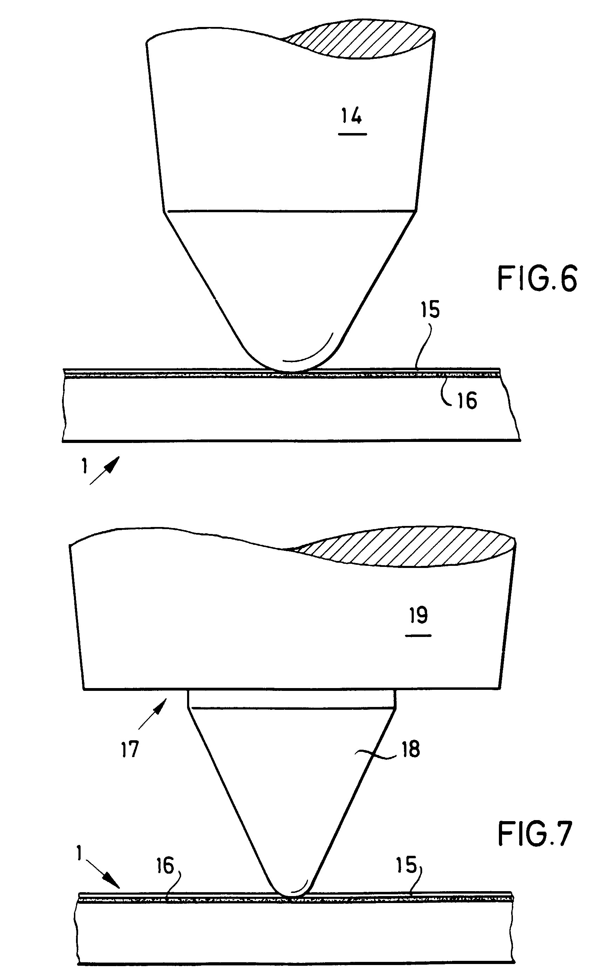

Für die Erzeugung von Punkten 13 gemäß der Fig. 2 muß das Makierorgan in der Lage sein, die plastisch verformbare weiße Deckschicht der Diagrammscheibe 1 durch einen Aufschlag so zu verdrängen, daß durch Freilegen des dunklen Untergrundes der gewünschte Punktdurchmesser entsteht. Ein derartiger Druckstift ist in Fig. 6 mit 14 bezeichnet. Um mit dem Druckstift 14 auf der üblichen Diagrammscheibe 1 einen Punkt 13 mit einem Durchmesser von 0,1 mm zu erzeugen, ist an der Spitze des Druckstiftes 14 ein Rundungsradius von beispielsweise 0,15 mm erforderlich. Der Vollständigkeit halber sei noch erwähnt, daß die Schichtdicke der weißen mit 15 bezeichneten Deckschicht 0,01 mm beträgt und daß zur Kontrastbildung das Papier der Diagrammscheibe 1 unter der Deckschicht 15 mit einer schwarzen Farbschicht 16 bedruckt ist.

Im Gegensatz zu dem Druckstift 14 ist in der Fig. 7 ein Schreibstift 17 dargestellt, an dessen Spitze ein Rundungsradius von beispielsweise 0,06 mm ausgebildet ist.

Die Fig. 3 zeigt wie mit einem derartigen Schreibstift 17 die Zeichenelemente durch Schreiben erzeugt werden können. Bei einem derart kleinen Rundungsradius ist es zweckmäßig für die eigentliche Schreibspitze eine Steinspitze, beispielsweise eine Saphirspitze 18 vorzusehen. Mit 19 ist eine der Saphierspitze 18 zugeordnete Fassung bezeichnet.

In der geschriebenen Version besteht jeweils jeder Punkt 13 der Kennzeichnung X aus zwei kurzen, dicht beieinanderliegenden Einzelstrichen. Somit weist die Schreibversion doppelt soviele Zeilen bzw. Schreibzyklen auf, wie die Druckversion. Der besondere Vorzug der Schreibversion ist insbesondere darin zu sehen, daß mit gegenüber der Druckversion wesentlich verringerter Energie eine auch innerhalb eines weiten Temperaturbereichs eindeutige und gut reproduzierbare Zeichenbildung erzielt wird. Ferner eignet sich die Schreibversion zur Bildung eines Mehrfachschreibers, das heißt, mit dem Schreibstift 17 können zusätzlich wenigstens die in dem Aufzeichnungsfeld 4 der Diagrammscheibe 1 aufzuzeichnenden Balkendiagramme und beispielsweise durch Einzelstriche darzustellende Zusatzinformationen aufgezeichnet werden. Mit einem das gesamte Aufzeichnungsfeld 4 überstreichenden durch entsprechende Ansteuerung eines Diagrammelementes auf die Diagrammscheibe 1 absenkbaren Schreibstift ist vom reduzierten Bauteileaufwand abgesehen der zur Verfügung stehende radiale Registrierhub besser nutzbar als mit mehreren einzelnen in diesem Bereich angeordneten Registrierorganen.

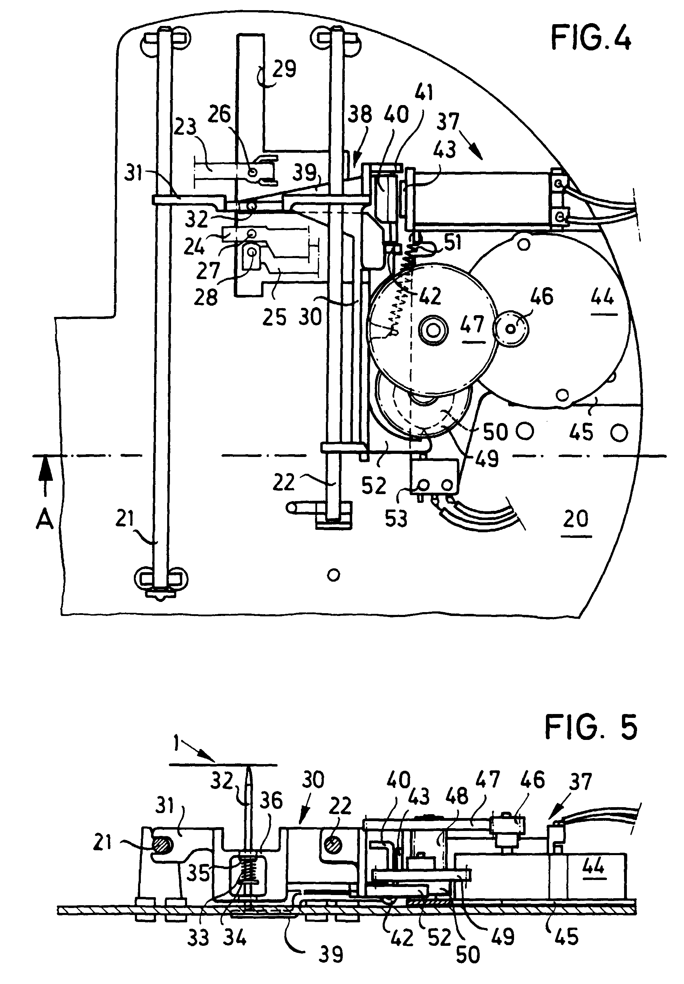

Das in den Fig. 4 und 5 dargestellte Ausführungsbeispiel der erfingungsgemäßen Vorrichtung stellt eine von mehreren Funktionsbaugruppen dar, die auf einer Montageplatte 20, welche in einen Fahrtschreiber einsetzbar ist, angeordnet sind. Der Übersichtlichkeit halber ist von diesen Funktionsbaugruppen nur die Erfingungsgemäße gezeichnet. Zwei Führungsstangen 21 und 22, welche mittels geeigneter im einzelnen nicht bezeichneter Stützen an der Montageplatte 20 befestigt sind, dienen in üblicher Weise der Lagerung mehrerer Schlitten bzw. Träger. Von diesen sind mit 23, 24 und 25 lediglich die Lagerbrücken für den Geschwindigkeitsschreibstift 26, den Arbeitszeitschreibstift 27 und den Wegschreibstift 28 angedeutet. Eine mit 29 bezeichnete Kontur stellt einen Durchbruch in der Montageplatte 20 dar. Mit 30 ist ein Träger bezeichnet, der in der üblichen Weise mit zwei Lagerstellen auf der einen Führungsstange 22 und mit einer Lagerstelle auf der anderen Führungsstange 21 verschiebbar und weitgehend spielfrei gelagert ist. An dem auf die Führungsstange 21 übergreifenden Arm 31 des Trägers 30 ist, wie die Figuren 4 und 5 erkennen lassen, eine Lagerbrücke für ein Markierorgan 32 unmittelbar angeformt. Das Markierorgan 32, das als Schreibstift oder als Druckstift ausgebildet sein kann, steht unter der Wirkung einer Druckfeder 33, die sich einerseits an einer mit dem Markierorgan 32 verbundenen Sicherungsscheibe 34, andererseits auf einer ortsfesten Scheibe 35 und somit auf dem einen Lagerschenkel 36 des Armes 31 abstützt.

In dem in den Figuren 4 und 5 dargestellten Zustand ist das Markierorgan 32 auf die Diagrammscheibe 1 abgesenkt, das heißt ein mit 37 bezeichneter Elektromagnet hat einen ihm zugeordneten als Winkelhebel ausgebildeten Anker 38, dessen einer Schenkel 39 an dem Markierorgan 32 stirnseitig angreift und dessen anderer Schenkel 40 mit dem Elektromagneten 37 zusammenwirkt, gegen die Wirkung der Druckfeder 33 verschwenkt. Wird der auf der Montageplatte 20 befestigte Elektromagnet 37 stromlos, so führt die Druckfeder 33 den Anker 38 in eine Ruhestellung zurück, in der der abgekröpfte Schenkel 40 des Ankers 38 am Träger 30 anliegt. Mit 41 und 42 sind am Träger 30 angeformte Lagerungen des Ankers 38 bezeichnet. Der als Ankerplatte dienende Schenkel 40 ist selbstverständlich so breit ausgebildet, daß er in jeder Stellung des Trägers 30 dem Kern 43 des Elektromagneten 37 ganzflächig gegenübersteht. Der wirksame, während des Aufliegens des Markierorgans auf der Diagrammscheibe 1 erforderliche Abstand zwischen dem Kern 43 und dem Schenkel 40 des Ankers 38 beträgt bei dem dargestellten Ausführungsbeispiel ungefähr 0,2 mm.

Für den Antrieb des Trägers 30 ist ein Schrittmotor 44 vorgesehen, welcher zusammen mit Elementen eines Untersetzungsgetriebes auf einer auf der Montageplatte 20 befestigten Laufwerksplantine 45 angeordnet ist. Das Untersetzungsgetriebe sieht ein auf der Motorwelle des Schrittmotors 44 befestigtes Ritzel 46 vor, welches mit einem Zahnrad 47 eines auf einer nicht bezeichneten ortsfesten Achse gelagerten Zahnradpaares 47/48 in Eingriff steht. Mit dem Zahnrad 48 kämmt ein ebenfalls auf einer ortsfesten Achse gelagertes Zahnrad 49, an welchem eine Herzkurvenscheibe 50 angeformt ist. Eine am Träger 30 angreifende Zugfeder 51 hält den Träger 30 über einen Arm 52 in Wirkverbindung mit der Herzkurvenscheibe 50. Mit 53 ist ein Schalter bezeichnet, der die Bewegung des Trägers 30 unterbricht, wenn dieser eine Hin- und Herbewegung ausgeführt hat.

Der Vollständigkeit halber sei noch erwähnt, daß zur Reduzierung der Bauhöhe das Markierorgan unmittelbar an einem federnden oder gefedert gelagerten und auf dem Träger 30 angeordneten Arm, der als Anker ausgebildet sein kann, anbringbar ist. Außerdem ist es an Stelle der elektromagnetischen Betätigung des Markierorgans 32 denkbar, eine Lösung gemäß des DE-GM 8804412 vorzusehen, das heißt, eine der Führungsstangen als Extenterwelle auszubilden. Die Extenterwelle ist in diesem Falle getrieblich mit einem Stellmotor verbunden, mittels dessen des Anheben und Absenken des Markierorgans gesteuert werden kann.

Andererseits ist es aber auch möglich, den Hub des mit dem Träger 30 fest verbundenen Markierorgans 32 nicht mittels einer motorisch antreibbaren, extentrisch gelagerten Führungsstange zu erzeugen, sondern durch einen auf den Träger 30 einwirkenden Elektromagneten. Dabei schwebt der Träger 30 um die eine Führungsstange, während die andere Führungsstange unter der Wirkung einer Rückstellfeder dem Träger 30, bei nicht bestromtem Elektromagneten, als Anschlag dient.

Ebenso ist es im Zusammenhang mit dem Ausführungsbeispiel gemäß den Figuren 4 und 5 denkbar, einen motorischen Antrieb vorzusehen und beispielsweise einen modifizierten , gegebenenfalls mit einem federnden Überhub versehenen Schenkel 40 des Ankers 38 mit einem Exzenter zusammenwirken zu lassen.

## Patentansprüche

1. Vorrichtung zur alphanumerischen Kennzeichnung von in einem Fahrtschreiber verwendeten Diagrammscheiben (1), wobei der Fahrtschreiber mit einem Microprozessor zur Ermittlung von Fahrtdaten (6) wie Strecke und Geschwindigkeit aus Gebersignalen sowie zur Lieferung von Arbeitszeitdaten (7) wie Lenkzeit und Ruhezeit und dergleichen, mit einem Laufwerk für den uhrzeitrichtigen Antrieb einer eingelegten Diagrammscheibe und mit Registriermitteln zur kontinuierlichen Darstellung der ermittelten Daten auf der Diagrammscheibe ausgerüstet ist, wobei
die Vorrichtung ein Markierorgan (32) aufweist, welches in Bezug auf die Diagrammscheibe (1) im wesentlichen radial bewegbar sowie absenk- und anhebbar gelagert ist,
daß ein das Markierorgan (32) lagernder Träger (30) getrieblich mit einem von den Antrieben des Fahrtschreibers unabhängigen Laufwerk (44, 45, 46, 47, 48, 49, 50) in Wirkverbindung steht,
dadurch gekennzeichnet,
daß zur Bildung der alphanumerischen Zeichen einzelne Punkte (13) einer Punktmatrix dienen und das Markierorgan (32) zur Erzeugung der auf einer Radialen liegenden Punkte (13) eines oder mehrerer Zeichen nach einem ersten Zyklus jeweils dann angesteuert wird, wenn ein im Zeilenabstand der Zeichenmatrix entsprechender Diagrammscheibenvorschub erfolgt ist.

2. Vorrichtung nach Anspruch 1
dadurch gekennzeichnet,
daß der Träger (30) als ein auf zwei Führungsstangen (21, 22) verschiebbar gelagerter Schlitten ausgebildet ist und
daß das Markierorgan (32) unmittelbar in dem zwischen den beiden Fühzrungsstangen (21, 22) vorgesehenen Arm (31) des Trägers (30) axial gefedert gelagert ist.

3. Vorrichtung nach Anspruch 1
dadurch gekennzeichnet,
daß auf dem Träger (30) ein zweiarmiger Anker (38) schwenkbar gelagert ist, dessen einer Schenkel (39) mit dem Markierorgan (32) in Wirkverbindung steht und dessen anderer Schenkel (40) als Ankerplatte eines ortsfest angeordneten Elektromagneten (37) ausgebildet ist.

4. Vorrichtung nach Anspruch 1
dadurch gekennzeichnet,
daß der elektromagnetische Antrieb des Markierorgans (32) auf dem Träger (30) angeordnet ist.

5. Vorrichtung nach Anspruch 4
dadurch gekennzeichnet,
daß das Markierorgan (32) zwischen den Registrierorganen für das Aufzeichnen der gefahrenen Geschwindigkeiten des Fahrzeuges (26) und der Arbeits- und Pausezeiten des Fahrers (27) angeordnet ist,
daß die Zeichen einer Fahrernummer (11) und die Diagrammscheibennnummer (12) in radialer Richtung lesbar sind und daß die Abmessungen der Punkte (23) größenordnungsmäßig 0,1 mm betragen.

6. Vorrichtung nach Anspruch 1
dadurch gekennzeichnet,
daß das Markierorgan (32) als Druckstift (14) ausgebildet ist derart, daß die stirnseitige Druckfläche konvex ausgebildet ist, wobei der Rundungsradius ≧ 1,2 mm beträgt.

7. Vorrichtung nach Anspruch 1
dadurch gekennzeichnet,
daß das Markierorgan (32) als Schreibstift (17) ausgebildet ist, wobei der Rundungsradius der Schreibspitze ≦ 0,08 mm beträgt und
daß jeder Punkt (13) durch Aufzeichnen zweier parallel liegender Striche gebildet wird.

8. Vorrichtung nach Anspruch 1
dadurch gekennzeichnet,
daß der Träger (30) auf zwei Führungsstangen (21, 22) verschiebbar gelagert ist, von denen eine als eine Extenterwelle ausgebildet ist, welche getrieblich mit einem das Anheben und Absenken des Markierorgans (32) steuernden Stellmotor in Verbindung steht.

9. Vorrichtung nach Anspruch 1
dadurch gekennzeichnet,
daß das Markierorgan (32) fest mit dem Träger (30) verbunden ist und die Extenterwelle mit dem Träger (30) einerseits unmittelbar andererseits über eine an dem Träger (30) befestigte Schenkelfeder zusammenwirkt.

## Claims

1. Device for the alphanumeric marking of tachograph discs (1) used in a tachograph, the tachograph being equipped with a microprocessor for determining journey data (6), such as distance and speed, from sensor signals and for delivering work-time data (7) such as driving time and rest time and the like, with a drive mechanism for driving an inserted tachograph disc in accordance with the correct time of day, and with recording means for continuously representing the determined data on the tachograph disc, the device having a marking element (32) which is mounted such that it can be lowered and lifted and moved substantially radially in relation to the tachograph disc (1), that [sic] a carrier (30), supporting the marking element (32), being drivingly in operative connection with a drive mechanism (44, 45, 46, 47, 48, 49, 50) independent of the drives of the tachograph,
characterized
in that individual dots (13) of a dot matrix serve to form the alphanumeric characters and the marking element (32) for creating the dots (13), lying on a radial line, of one or more characters is triggered, after a first cycle, in each case when an advance of the tachograph corresponding to the line spacing of the dot matrix takes place.

2. Device according to Claim 1,
characterized
in that the carrier (30) is constructed as a slide mounted displaceably on two guide bars (21, 22) and in that the marking element (32) is mounted in axially spring-loaded fashion directly in the arm (31), provided between the two guide bars (21, 22), of the carrier (30).

3. Device according to Claim 1,
characterized
in that a two-armed armature (38) is pivotably mounted on the carrier (30), whose one limb (39) is in operative connection with the marking element (32) and whose other limb (40) is constructed as an armature plate of a stationarily arranged electromagnet (37).

4. Device according to Claim 1,
characterized
in that the electromagnetic drive of the marking element (32) is arranged on the carrier (30).

5. Device according to Claim 4,
characterized
in that the marking element (32) is arranged between the recording elements for recording the attained speeds of the vehicle (26) and the driver's work times and break times (27),
in that the characters of a driver number (11) and the tachograph-disc number (12) are readable in the radial direction and in that the dimensions of the dots (23) are of the order of 0.1 mm.

6. Device according to Claim 1,
characterized
in that the marking element (32) is constructed as a printing pin (14) in such a way that the end-face printing surface is convexly shaped, the radius of rounding being ≥ 1.2 mm.

7. Device according to Claim 1,
characterized
in that the marking element (32) is constructed as a writing stylus (17), the radius of rounding of the writing tip being ≤ 0.08 mm and
in that each dot (13) is formed by recording two parallel strokes.

8. Device according to Claim 1,
characterized
in that the carrier (30) is mounted displaceably on two guide bars (21, 22), one of which is constructed as an eccentric shaft which is drivingly in operative connection with a positioning motor controlling the lifting and lowering of the marking element (32).

9. Device according to Claim 1,
characterized
in that the marking element (32) is fixedly connected to the carrier (30) and the eccentric shaft cooperates with the carrier (30) on the one hand directly and on the other hand via a leg spring fastened to the carrier (30).

## Revendications

1. Dispositif pour l'identification alphanumérique de disques de diagramme (1) utilisés dans un enregistreur de route, ledit enregistreur de route étant équipé d'un microprocesseur pour la détermination de données de parcours (6) telles que distances parcourues et vitesses à partir de données de transmetteurs ainsi que pour la fourniture de données de temps de travail (7) tels que temps de conduite et temps de repos etc., avec un mécanisme pour l'entraînement en fonction du temps réel d'un disque de diagramme inséré et avec des moyens d'enregistrement pour la visualisation continue des données acquises sur ledit disque de diagramme, le dispositif présentant un organe de marquage (32) qui est monté de manière à pouvoir être déplacé, pour l'essentiel dans le sens radial, ainsi qu'à être abaissé et relevé par rapport au disque de diagramme, un support (30) portant ledit organe de marquage (32) coopérant fonctionnellement avec un mécanisme d'entraînement (44, 45, 46, 47, 48, 49, 50) indépendant des entraînements de l'enregistreur de route,
caractérisé par le fait
que ce sont différents points (13) d'une matrice de points qui servent à la formation des caractères alphanumériques et que, pour la génération des points (13) situés sur une radiale d'un ou de plusieurs caractères, l'organe de marquage (32) ne sera respectivement attaqué que lorsque la distance d'avancement du disque de diagramme correspond à l'espacement des lignes.

2. Dispositif selon la revendication 1,
caractérisé par le fait
que le support (30) est réalisé sous forme d'un chariot monté de manière à pouvoir être déplacé sur deux barres de guidage (21, 22) et
que l'organe de marquage (32) est monté, élastique dans la sens axial, directement dans le bras (31) du support (30) prévu entre les deux barres de guidage (20, 21).

3. Dispositif selon la revendication 1,
caractérisé par le fait
que sur le support (30) est monté à pivotement une armature à deux bras (38) dont l'une des branches (39) coopère avec l'organe de marquage (32) et dont l'autre branche (40) est réalisée comme plaque d'armature d'un électro-aimant (37) disposé de façon stationnaire.

4. Dispositif selon la revendication 1,
caractérisé par le fait
que l'entraînement électromagnétique de l'organe de marquage (32) est disposé sur le support (30).

5. Dispositif selon la revendication 4,
caractérisé par le fait
que l'organe de marquage (32) est disposé entre les organes enregistreurs pour l'enregistrement des vitesses atteintes du véhicule (26) et des temps de travail et de repos du conducteur (27),
que les caractères d'un numéro de conducteur (11) et le numéro de disque de diagramme sont lisibles dans le sens radial et que les dimensions des points sont de l'ordre de grandeur de 0,1 mm.

6. Dispositif selon la revendication 1,
caractérisé par le fait
que l'organe de marquage (32) est réalisé sous forme de stylet imprimeur (14), de telle sorte que la surface d'impression frontale est de forme convexe, le rayon d'arrondi étant ≥ 1,2 mm.

7. Dispositif selon la revendication 1,
caractérisé par le fait
que l'organe de marquage (32) est réalisé sous forme d'un stylet scripteur (17), le rayon d'arrondi de la pointe d'inscription étant ≤ 0,08 mm et
que chaque point (13) sera formé par le traçage de deux traits situés en parallèle.

8. Dispositif selon la revendication 1,
caractérisé par le fait
que le support (30) est monté de manière à pouvoir être déplacé sur deux barres de guidage (21, 22) dont l'une est réalisée sous forme d'un arbre d'excentrique qui coopère fonctionnellement avec un moteur d'asservissement commandant le relèvement et l'abaissement de l'organe de marquage (32).

9. Dispositif selon la revendication 1,
caractérisé par le fait
que l'organe de marquage (32) est solidaire du support (30) et que l'arbre d'excentrique coopère, d'une part, directement avec le support (30) et, d'autre part, par l'intermédiaire d'un ressort à branches fixé sur ledit support (30).
